(19) **Europäisches Patentamt / European Patent Office / Office européen des brevets**

(11) **EP 4 660 844 A1**

(12) **EUROPEAN PATENT APPLICATION**
published in accordance with Art. 153(4) EPC

(43) Date of publication:
**10.12.2025 Bulletin 2025/50**

(21) Application number: **23919673.6**

(22) Date of filing: **01.02.2023**

(51) International Patent Classification (IPC):
**G06F 16/906** (2019.01)

(52) Cooperative Patent Classification (CPC):
**G06F 16/906**

(86) International application number:
**PCT/JP2023/003149**

(87) International publication number:
**WO 2024/161533 (08.08.2024 Gazette 2024/32)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **FUJITSU LIMITED**
**Kawasaki-shi, Kanagawa 211-8588 (JP)**

(72) Inventors:
• **OKURA Seiji**
  **Kawasaki-shi, Kanagawa 211-8588 (JP)**
• **IWASHITA Hiroaki**
  **Kawasaki-shi, Kanagawa 211-8588 (JP)**
• **KAKIBUCHI Taisei**
  **Kawasaki-shi, Kanagawa 211-8588 (JP)**
• **FUKUTA Shigeki**
  **Kawasaki-shi, Kanagawa 211-8588 (JP)**

(74) Representative: **Hoffmann Eitle**
**Patent- und Rechtsanwälte PartmbB**
**Arabellastraße 30**
**81925 München (DE)**

(54) **EXTRACTION PROGRAM, EXTRACTION DEVICE, AND EXTRACTION METHOD**

(57)    An extraction program causes a computer to execute a process. The process includes extracting a plurality of subsets from a data set including a plurality of pieces of data including a feature quantity of each of a plurality of feature types, the plurality of subsets each including part of the plurality of pieces of data. The process includes obtaining, using each of the plurality of subsets, a combination of features useful for data prediction. The process includes extracting a specific number of combinations from a plurality of the combinations obtained from the plurality of subsets, the extracting being based on statistical information regarding each of the plurality of combinations. The process includes outputting the specific number of combinations.

FIG.7

| label | chunk | len | supp_8 | conf_8 | chi2_8 | nmi_8 | weight_8 |
|---|---|---|---|---|---|---|---|
| 1 | AP24 ∧ E49 | 2 | 0.093023 | 1 | 4.575446 | 0.049062 | 1.16 |
| 1 | AP24 ∧ E48 | 2 | 0.093023 | 1 | 4.575446 | 0.049062 | 1.16 |
| 1 | AP24 ∧ E44 | 2 | 0.093023 | 1 | 4.575446 | 0.049062 | 1.16 |
| 1 | AP24 ∧ E39 | 2 | 0.093023 | 1 | 4.575446 | 0.049062 | 1.16 |
| 1 | AP24 ∧ E35 | 2 | 0.093023 | 1 | 4.575446 | 0.049062 | 1.16 |
| 1 | AP24 ∧ E29 | 2 | 0.093023 | 1 | 4.575446 | 0.049062 | 1.16 |
| 1 | AP24 ∧ E26 | 2 | 0.093023 | 1 | 4.575446 | 0.049062 | 1.16 |
| 1 | AP24 ∧ E24 | 2 | 0 | 0 | 0 | 0 | 0 |
| 1 | E19 ∧ AP24 | 2 | 0.093023 | 1 | 4.575446 | 0.049062 | 1.16 |
| 1 | E8 ∧ AP24 | 2 | 0.093023 | 1 | 4.575446 | 0.049062 | 1.16 |
| 1 | E5 ∧ AP24 | 2 | 0.093023 | 1 | 4.575446 | 0.049062 | 1.16 |

EP 4 660 844 A1

## Description

Field

The present invention relates to an extraction technique for extracting a combination of features included in data.

Background

When prediction is performed, using artificial intelligence (AI), on prediction target data, a type of AI suitable for prediction varies depending on whether or not explainability of prediction is given importance. The explainability of prediction refers to a capacity to provide a prediction basis for reaching a prediction result obtained.

Types of AI are roughly divided into a white box and a black box. The white box is AI whose prediction basis is transparent, and the black box is AI whose prediction basis is opaque.

The white box includes a decision tree, a random forest, a logistic regression, and a support vector machine (SMV) using linear kernel. The decision tree and the random forest are rule-based AI, and the logistic regression and the SMV using linear kernel are non-rule-based AI.

The black box includes an SMV using non-linear kernel and a neural network. The SMV using non-linear kernel and the neural network are non-rule-based AI.

When prediction accuracy and explainability of prediction are given importance, the white box is used. On the other hand, when only the prediction accuracy is given importance and the explainability of prediction is not emphasized, either the white box or the black box is used.

Although the prediction accuracy is improved as the number of feature types included in prediction target data is increased, it becomes difficult to identify which feature is useful for prediction. Thus, the explainability of prediction is deteriorated.

Data mining is one of techniques for increasing the number of feature types included in the prediction target data. By using data mining, a combination of a plurality of feature types useful for making prediction can be generated from a set of data including feature quantities of various features. Hereinafter, the combination of the plurality of feature types may be referred to as a "feature set".

In basket analysis, an example of data mining, information indicating that a person who buys bread and butter tends to buy milk, and the like is extracted. In this case, a feature set useful for predicting whether a prediction target person will buy milk is a combination of bread and butter.

The feature useful for prediction is a feature that greatly affects a prediction result, and prediction can be effectively performed by using the feature useful for prediction. Therefore, a feature set useful for prediction, generated by data mining, can be used as a valid prediction basis. The smaller the number of generated feature sets is, the more the explainability of prediction is improved.

In relation to prediction by AI, there is known an information processing apparatus that automatically adds a new feature item based on a combination of a plurality of related items included in past data to a feature used when predicting a prediction subject value using machine training (e.g., Patent Literature 1).

There is also known a case where Wide Learning (registered trademark), one type of explainable AI, is applied to discovery of electoral factors (e.g., Non Patent Literature1). Association rule mining is also known (e.g., Non Patent Literature 2).

Citation List

Patent Document

Patent Document 1: Japanese Laid-open Patent Publication No. 2018-190044

Non Patent Document

Non Patent Document 1: "Hello Wide Learning (registered trademark)", FUJITSU LIMITED, (online), (searched on December 6, 2022), Internet <URL:https://widelearning.labs.fujitsu.com/ja/whatsWL/cases tudy02.html>
Non Patent Document 2: Tahara, Takuma and Takama, Yasufumi, "Proposal on visualization of closed itemset considering item category for association rule mining", 26th Fuzzy System Symposium, p. 1218-1219, 2010

Summary

Technical Problem

When a large number of feature sets useful for prediction is generated by data mining, it is difficult to interpret a prediction basis, and the explainability of prediction is deteriorated.

Note that this problem occurs not only in feature sets generated by data mining but also in various feature sets generated by various types of information processing.

In one aspect, an object of the present invention is to improve the explainability of prediction performed on data including a feature quantity of each of a plurality of feature types.

Solution to Problem

According to an aspect, an extraction program causes a computer to execute a process.

The process includes extracting a plurality of subsets from a data set including a plurality of pieces of data including a feature quantity of each of a plurality of feature types, the plurality of subsets each including part of the plurality of pieces of data. The process includes obtaining, using each of the plurality of subsets, a combination of features useful for data prediction. The process includes extracting a specific number of combinations from a plurality of the combinations obtained from the plurality of subsets, the extracting being based on statistical information regarding each of the plurality of combinations. The process includes outputting the specific number of combinations.

Advantageous Effects of Invention

According to one aspect, it is possible to improve the explainability of prediction performed on data including a feature quantity of each of a plurality of feature types.

Brief Description of Drawings

FIG. 1 is a functional configuration diagram of an extraction device according to an embodiment.
FIG. 2 is a flowchart of a first extraction process.
FIG. 3 is a configuration diagram of an information processing system.
FIG. 4 is a functional configuration diagram of an extraction device included in the information processing system.
FIG. 5 is a diagram illustrating a data set.
FIG. 6 is a diagram illustrating a feature set generated from the data set.
FIG. 7 is a diagram illustrating a feature set generated from an eighth subset.
FIG. 8 is a diagram illustrating a feature set generated from a ninth subset.
FIG. 9 is a diagram illustrating statistical values.
FIG. 10A is a flowchart (Part 1) of a second extraction process.
FIG. 10B is a flowchart (Part 2) of the second extraction process.
FIG. 11A is a flowchart (Part 1) of a third extraction process.
FIG. 11B is a flowchart (Part 2) of the third extraction process.
FIG. 12A is a flowchart (Part 1) of a fourth extraction process.
FIG. 12B is a flowchart (Part 2) of the fourth extraction process.
FIG. 12C is a flowchart (Part 3) of the fourth extraction process.
FIG. 13 is a hardware configuration diagram of an information processing apparatus.

Embodiments for Carrying Out the Invention

Hereinafter, embodiments will be described in detail with reference to the drawings.

In data mining, a feature set is generated by combining a plurality of feature types. Therefore, as the number of feature types included in data increases, the number of feature sets generated increases. The total number of feature sets generated from $\alpha$ types of features is $2^\alpha$. For example, when $\alpha = 50$, $2^\alpha$ = about 1250 trillion.

AI according to Non Patent Literature 1 also has a data mining function. In a case of discovering an electoral factor, a combination of important items is generated from training data of each of a plurality of candidates. The combination of important items represents a combination of features useful for prediction of winning or losing an election among a plurality of feature types included in the data of each candidate. The features included in the data of each candidate are age, gender, a political party, a block (electoral district), the number of times elected, distinction between a new candidate, an incumbent, or a former candidate, and the like. In this case study, the following feature sets are generated as an example.

Gender = Female ⋀ Age > = 60 ⋀ Number of times elected > = 3        (a)

Gender = Female ⋀ Age > =70 ⋀ Number of times elected >=4        (b)

```
(c) Gender = Female ⋀ Block = Kyushu block
```

Number of times elected > =5 ⋀ Block = Kyushu block        (d)

A symbol "⋀" represents a logical product. A feature set (a) represents a combination of gender, age, and the number of times elected. The feature set (a) indicates a condition that the gender is female, the age is 60 years old or above, and the number of times elected is three or more.

A feature set (b) also represents a combination of gender, age, and the number of times elected. The feature set (b) indicates a condition that the gender is female, the age is 70 years old or above, and the number of times elected is four or more.

A feature set (c) represents a combination of gender and block. The feature set (c) indicates a condition that the gender is female and the block is a Kyushu block. A feature set (d) represents a combination of the number of times elected and block. The feature set (d) indicates a condition that the number of times elected is five or more and the block is the Kyushu block.

At first glance, the feature sets (a) to (d) appear to indicate conditions satisfied by data of different candidates. Actually, however, the feature sets (a) to (d) indicate the conditions satisfied by data of the same candidate.

As described above, according to the AI of Non Patent Literature 1, when a large number of feature sets indicating conditions satisfied by the same data is generated, it is difficult to interpret the prediction basis, and the explainability of prediction is deteriorated. For example, when 100 or more feature sets indicating conditions satisfied by the same data are generated, it is difficult to identify which feature is useful for prediction.

In the data mining, multivariate analysis such as multiple regression analysis or logistic regression analysis may be used to obtain importance of each of the plurality of feature sets generated. In this case, each feature set is used as an explanatory variable, and a regression coefficient of each explanatory variable obtained by analysis represents the importance of the explanatory variable.

In the multivariate analysis, when there are a plurality of explanatory variables highly associated to each other, calculation in the analysis becomes unstable, and the accuracy of regression equation may extremely decrease or the regression coefficient or an odds ratio may become an abnormal value. A phenomenon in which an analysis result becomes unstable as described above is called multicollinearity. More specifically, the presence of a large number of explanatory variables may cause not only deterioration of the explainability of prediction described above but also deterioration of analysis performance due to multicollinearity.

Measures against the multicollinearity include reduction of the explanatory variables and dimensional compression by principal component analysis. However, since the dimensional compression deteriorates the explainability of prediction, it is not preferable to apply the dimensional compression to explainable AI.

Examples of a method for reducing explanatory variables include selection of explanatory variables based on variance inflation factor (VIF), L1 regularization, and L2 regularization. The VIF is an index indicating the magnitude of multicollinearity.

In the selection of explanatory variables based on the VIF, calculation becomes enormous when the number of explanatory variables is large. Although a speeding up method has also been proposed, the scope of application is limited. When there are a plurality of similar explanatory variables, it is difficult to automatically determine which explanatory variable to keep.

In the L1 regularization and the L2 regularization, when there are a plurality of feature sets indicating conditions satisfied by the same data, it is difficult for the regression analysis to control selection of explanatory variables representing which feature set.

Association rule mining according to Non Patent Literature 2 is also an example of the data mining. In the association rule mining, the minimum support and the minimum confidence are defined as evaluation metrics, and a rule satisfying the minimum confidence is extracted, from itemsets (frequent itemsets) exceeding the minimum support, as an association rule. With respect to a frequent itemset A, when there is no itemset B of the same frequency satisfying $A \subset B$, A is called a closed itemset. In this case, each item corresponds to a feature, and the itemset corresponds to a feature set.

By using the association rule mining according to Non Patent Literature 2, the closed itemset can be extracted as the feature set. However, it is not clear whether the feature set extracted is useful for prediction.

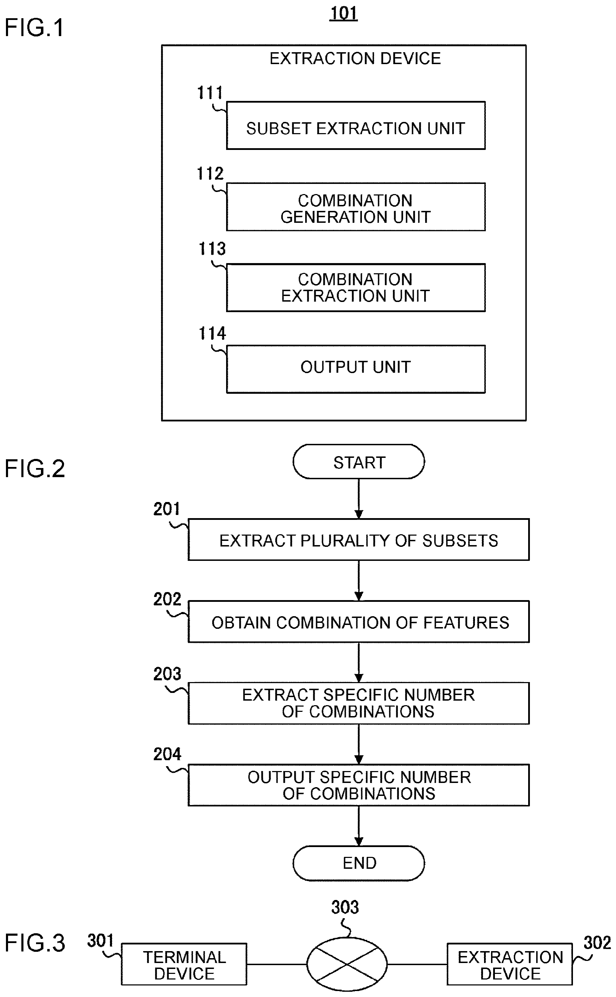

FIG. 1 illustrates a functional configuration example of an extraction device according to an embodiment; An extraction device 101 in FIG. 1 includes a subset extraction unit 111, a combination generation unit 112, a combination extraction unit 113, and an output unit 114.

FIG. 2 is a flowchart illustrating an example of a first extraction process performed by the extraction device 101 in FIG. 1. First, the subset extraction unit 111 extracts, from a data set including a plurality of pieces of data including a feature quantity of each of a plurality of feature types, a plurality of subsets each including part of the plurality of pieces of data (Step 201). Next, the combination generation unit 112 obtains a combination of features useful for data prediction, using each of the plurality of subsets (Step 202).

Next, the combination extraction unit 113 extracts a specific number of combinations from a plurality of combinations obtained from the plurality of subsets, based on statistical information regarding each of the plurality of combinations (Step 203). Then, the output unit 114 outputs the specific number of combinations (Step 204).

The extraction device 101 in FIG. 1 improves the explainability of prediction on data including the feature quantity of each of the plurality of feature types. Furthermore, the extraction device 101 in FIG. 1 performs selection of explanatory variables (reduction of the number of explanatory variables) by obtaining the combination of features useful for data prediction. Thus, deterioration of analysis performance due to multicollinearity is suppressed.

FIG. 3 illustrates a configuration example of an information processing system including the extraction device 101 in FIG. 1. The information processing system in FIG. 3 includes a terminal device 301 and an extraction device 302. The extraction device 302 corresponds to the extraction device 101 in FIG. 1.

The terminal device 301 is an information processing apparatus (computer) of a user, and communicates with the extraction device 302 via a communication network 303. The communication network 303 is, for example, a wide area network (WAN) or a local area network (LAN).

The terminal device 301 transmits a processing request including a plurality of pieces of data to the extraction device 302. Each piece of data included in the processing request is, for example, training data used in machine training for generating a prediction model, and the each piece of data includes a feature quantity of a plurality of features of different types. The prediction model is a trained machine training model, and performs predetermined prediction on prediction target data to output a prediction result. The prediction model may be the AI according to Non Patent Literature 1.

The predetermined prediction is, for example, prediction of a candidate being elected in an election, prediction of whether or not a specific medicine has an effect on a prediction target person, prediction of whether or not an animal is a mammal, and prediction of whether or not measures for infectious diseases have an effect of suppressing infection spread.

The extraction device 302 uses the plurality of pieces of data included in the processing request received from the terminal device 301 to generate a specific number of feature sets useful for prediction on the prediction target data, and transmits a response including the specific number of feature sets generated to the terminal device 301. The specific number is an integer of 1 or more.

The terminal device 301 displays on the screen the specific number of feature sets included in the response received from the extraction device 302. As a result, the user can confirm a feature serving as a valid prediction basis of a prediction result among the plurality of features included in the data transmitted.

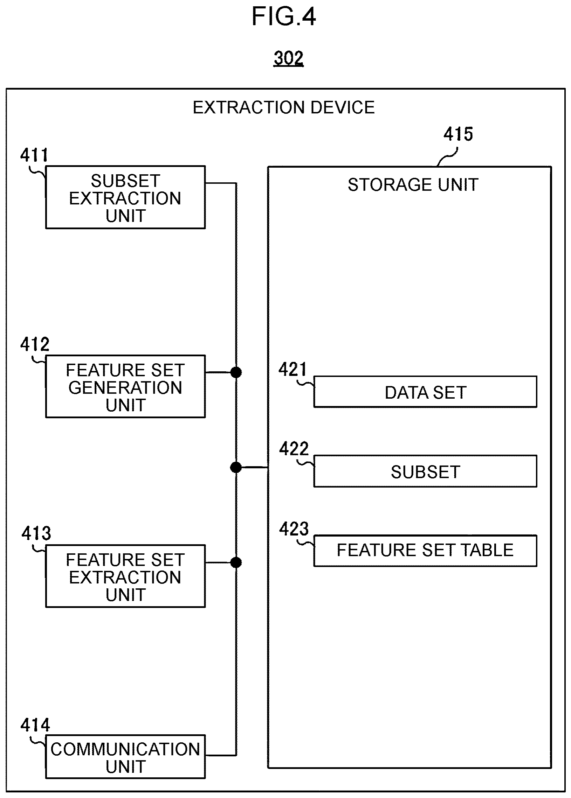

FIG. 4 illustrates a functional configuration example of the extraction device 302 in FIG. 3. The extraction device 302 in FIG. 3 includes a subset extraction unit 411, a feature set generation unit 412, a feature set extraction unit 413, a communication unit 414, and a storage unit 415.

The subset extraction unit 411, the feature set generation unit 412, the feature set extraction unit 413, and the communication unit 414 correspond to the subset extraction unit 111, the combination generation unit 112, the combination extraction unit 113, and the output unit 114 in FIG. 1, respectively.

The communication unit 414 communicates with the terminal device 301 via the communication network 303. The subset extraction unit 411 receives a processing request from the terminal device 301 via the communication unit 414, and stores a plurality of pieces of data included in the processing request received, as a data set 421, in the storage unit 415.

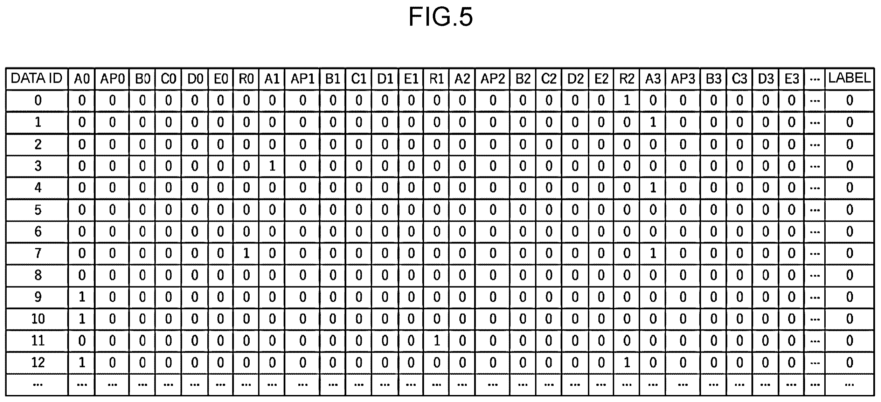

FIG. 5 illustrates an example of the data set 421 in a table format. Each row of the data set 421 in FIG. 5 represents training data used in machine training for generating a prediction model, and symbols such as A0, AP0, B0, C0, and D0 in each column represent gene names. In this case, the prediction model predicts whether or not there is an effect of a specific medicine on prediction target persons based on data of the prediction target persons.

Each piece of training data includes a data ID, an attribute value associated with each of a plurality of gene names, and a label. The data ID is identification information of a person corresponding to the training data.

The attribute value indicates whether or not the person indicated by the data ID has a gene of a corresponding gene name. An attribute value "1" indicates that the person has the gene, and an attribute value "0" indicates that the person does not have the gene.

The label indicates a prediction result of a correct answer for a plurality of attribute values. A label "1" indicates that the medicine has an effect on the person, and a label "0" indicates that the medicine has no effect on the person.

The training data illustrated in FIG. 5 is part of a plurality of training data included in the data set 421, and the gene names indicated in FIG. 5 are part of gene names of the plurality of attribute values included in the training data. The gene name corresponds to the feature, and the attribute value corresponds to the feature quantity. The label is an example of a correct answer label determined for the feature quantity of each of the plurality of feature types.

The subset extraction unit 411 randomly extracts some data from the data set 421, generates a subset 422 including the extracted data, and stores the subset 422 in the storage unit 415. The subset extraction unit 411 generates a plurality of the subsets 422 by repeating data extraction a plurality of times.

The feature set generation unit 412 generates one or more feature sets useful for data prediction by performing data mining using the generated subset 422 every time the subset 422 is generated. Then, the feature set generation unit 412 generates a feature set table 423 including feature sets generated and stores the feature set table 423 in the storage unit 415.

As the data mining, for example, a data mining function of the AI according to Non Patent Literature 1 may be used. Each time the subset 422 is generated, a feature set generated from the subset 422 is recorded in the feature set table 423. Each feature set in the feature set table 423 includes a condition for the feature quantity of each of the plurality of features. Each feature set is associated with a label included in a certain number of pieces or more of data among data including the feature quantity satisfying the condition in the data set 421.

The feature set extraction unit 413 extracts a specific number of feature sets from the plurality of feature sets included in the feature set table 423 based on statistical information regarding each feature set, and generates a response including the specific number of feature sets extracted. Then, the feature set extraction unit 413 transmits the response to the terminal device 301 via the communication unit 414.

As the statistical information regarding the feature set, for example, the number of times of appearance of the feature set, a statistical value of an index of the feature set, or a statistical value of importance of the feature set is used. The number of times of appearance of the feature set represents the number of times of generation of the feature set generated by the feature set generation unit 412, and corresponds to the number of subsets 422 used for obtaining the feature set among all the subsets 422.

As the index of the feature set, for example, confidence (conf), support (supp), chi-square value (chi2), or normalized mutual information (nmi) is used. As the statistical value, for example, a standard deviation or a variance is used.

The feature set extraction unit 413 calculates the conf for each feature set generated from each of the subsets 422 by the following formula, and records the conf in the feature set table 423.

$$\text{conf} = m/n \qquad\qquad (1)$$

Among the data included in the subset 422, m represents the number of pieces of data including the feature quantity satisfying the condition indicated by the feature set and also including the same label as the label associated with the feature set. Among the data included in the subset 422, n represents the number of pieces of data including the feature quantity satisfying the condition indicated by the feature set. Therefore, the conf represents a ratio of the data including the same label as the feature set among the data including the feature quantity satisfying the condition indicated by the feature set.

A label value included in the data is any of V (1) to V (K) (K is an integer of 2 or more) determined in advance. In the example in FIG. 5, K = 2, V (1) = 0, and V (2) = 1. In this case, a label of each piece of data from data ID "1" to data ID "12" is V (1).

The feature set extraction unit 413 calculates the supp for each feature set generated from each of the subsets 422 by the following formula, and records the supp in the feature set table 423.

$$\text{supp} = m/L \qquad\qquad (2)$$

Among the data included in the subset 422, L represents the number of pieces of data including the same label as the label associated with the feature set. Therefore, the supp represents a ratio of the data including the feature quantity satisfying the condition indicated by the feature set among the data including the same label as the feature set.

The feature set extraction unit 413 calculates the chi2 for each feature set generated from each of the subsets 422 by the following formula, and records the chi2 in the feature set table 423.

$$\text{chi2} = (OL - EL)^2/EL + (ON - EN)^2/EN \qquad\qquad (3)$$

$$OL = m \qquad\qquad (4)$$

$$EL = (L/z) \times n \tag{5}$$

$$ON = n - OL \tag{6}$$

$$EN = (1 - (L/z)) \times n \tag{7}$$

z represents the number of pieces of data included in the subset 422. Among the data included in the subset 422, OL represents an observation value of the number of pieces of data including the feature quantity satisfying the condition indicated by the feature set and also including the same label as the label associated with the feature set. EL is an expected value for OL.

Among the data included in the subset 422, ON represents an observation value of the number of pieces of data including the feature quantity satisfying the condition indicated by the feature set and also including a label different from the label associated with the feature set. EN is an expected value for ON.

The feature set extraction unit 413 calculates the nmi for each feature set generated from each of the subsets 422 by the following formula, and records the nmi in the feature set table 423.

$$nmi = (H(X) - H(X | Y))/H(X) \tag{8}$$

$$H(X) = -\Sigma_x P_X(x) \log P_X(x) \tag{9}$$

$$H(X|Y) = -\Sigma_{x,y} P_{X,Y}(x,y) \log P_{X|Y}(x|y) \tag{10}$$

$$P_{X|Y}(x|y) = P_{X,Y}(x,y)/P_Y(y) \tag{11}$$

X is a variable indicating the label included in the data, and Y is a variable indicating a feature set corresponding to a feature quantity included in the data. x is a variable indicating any of V(1) to V(K), and y is a variable indicating any feature set.

Among the data included in the subset 422, Px(x) represents a ratio of data including a label x. Among the data included in the subset 422, $P_Y(y)$ represents a ratio of data including a feature quantity satisfying a condition indicated by a feature set y. Among the data included in the subset 422, $P_{X,Y}(x,y)$ represents a ratio of data including the label x and also including the feature quantity satisfying the condition indicated by the feature set y.

$\Sigma_x$ represents the sum of all x. $\Sigma_{x,y}$ represents the sum of all x and all y.

The feature set extraction unit 413 calculates a regression coefficient of each explanatory variable by performing the logistic regression analysis using each of the plurality of feature sets generated from each subset 422 as an explanatory variable. As an objective variable in the logistic regression analysis, a predetermined function using the probability that the label becomes a specific value is used. The feature set extraction unit 413 records the regression coefficient of each explanatory variable in the feature set table 423 as the importance of each feature set. The plurality of feature sets generated from each subset 422 is an example of a predetermined number of feature sets.

When repetition of generating the subset 422 ends, the feature set extraction unit 413 calculates statistical values of the conf, supp, chi2, nmi, and importance for each feature set recorded in the feature set table 423.

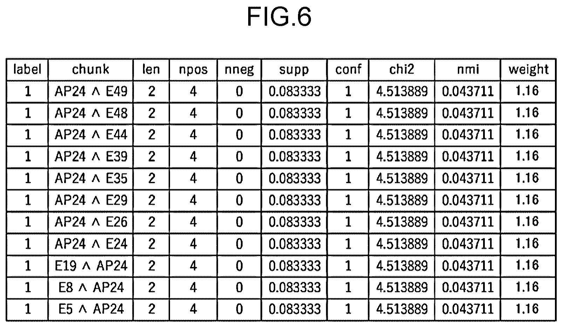

FIG. 6 illustrates an example of the feature sets generated from the data set 421 in FIG. 5. In this example, the feature sets are generated by performing data mining using all training data included in the data set 421 instead of the subset 422. The feature sets illustrated in FIG. 6 is part of a plurality of feature sets generated from the data set 421 in FIG. 5.

A chunk represents a feature set. For example, "AP24 ∧ E49" represents a combination of a gene name "AP24" and a gene name "E49". "AP24 ∧ E49" indicates a condition that the attribute value of the AP24 is "1" and the attribute value of E49 is "1".

A label represents a label associated with the chunk. len represents the number of features included in the chunk. Among the data included in the data set 421, npos represents the number of pieces of data including the feature quantity satisfying the condition indicated by the chunk and also including the same label as the label. Among the data included in the data set 421, nneg represents the number of pieces of data including the feature quantity satisfying the condition indicated by the chunk and also including a label different from the label.

The supp, conf, chi2, and nmi represent indexes calculated for the chunk. A weight represents the importance of the chunk. As the prediction basis, for example, all chunks having a weight other than "0" can be used.

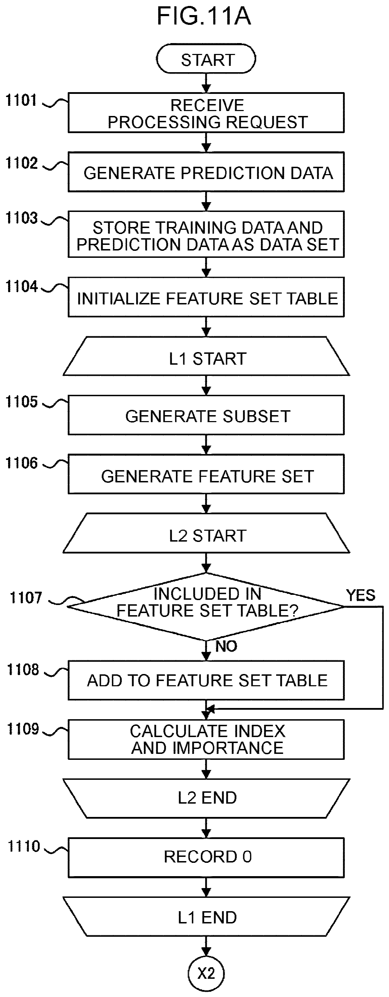

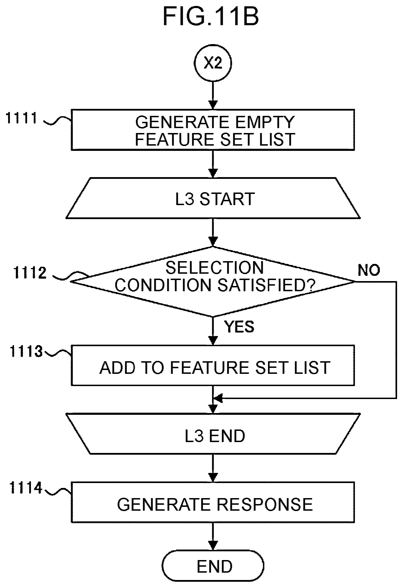

In FIG. 6, 11 chunks indicate a plurality of conditions satisfied by the same training data included in the data set 421 in FIG. 5. When all these chunks are included in the response, it is difficult for the user to understand the prediction basis.

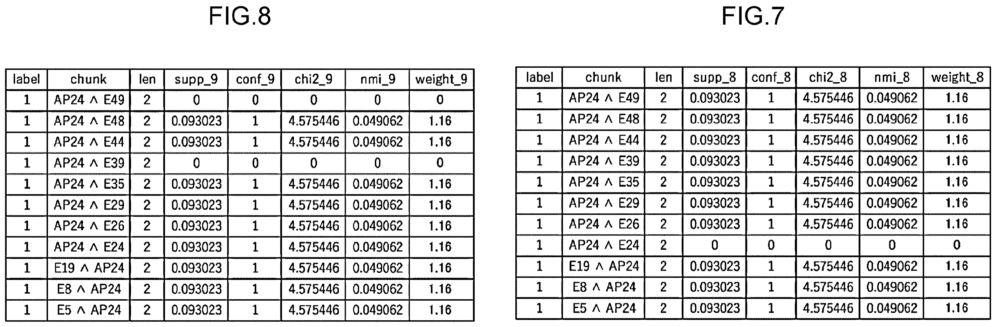

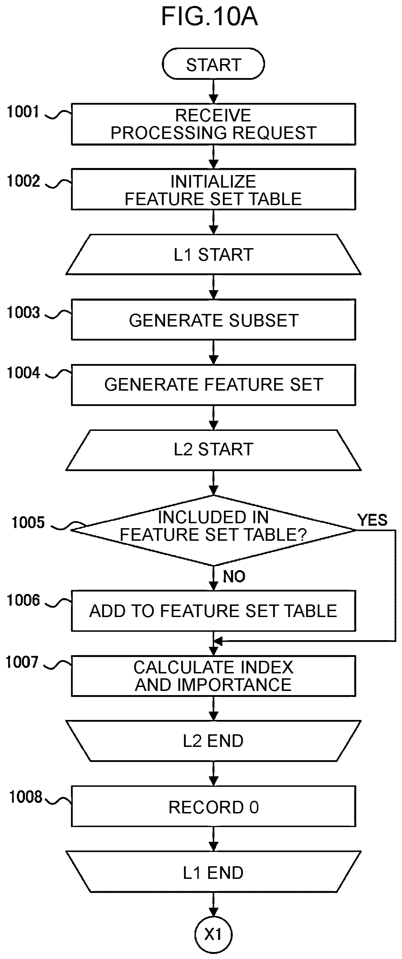

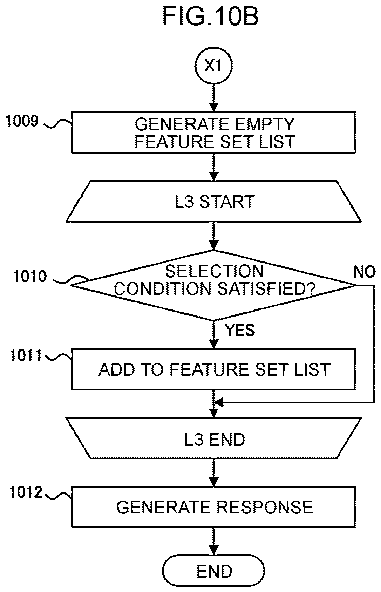

FIG. 7 illustrates an example of a feature set generated from an eighth subset 422 when the subset 422 is generated 9 times. The feature sets illustrated in FIG. 7 are part of a plurality of feature sets generated from the eighth subset 422. In this example, among the 11 feature sets illustrated in FIG. 6, 10 feature sets excluding "AP24 Λ E24" are generated.

In supp_8, conf_8, chi2_8, nmi_8, and weight_8, "8" indicates that the eighth subset 422 is used for calculating values. These values are recorded in the feature set table 423. For "AP24 Λ E24" whose feature set is not generated from the eighth subset 422, "0" is recorded as supp_8, conf_8, chi2_8, nmi_8, and weight_8.

FIG. 8 illustrates an example of feature sets generated from a ninth subset 422. The feature sets illustrated in FIG. 8 are part of a plurality of feature sets generated from the ninth subset 422. In this example, among the 11 feature sets illustrated in FIG. 6, eight feature sets excluding "AP24 Λ E49" and "AP24 Λ E39" are generated.

In supp_9, conf_9, chi2_9, nmi_9, and weight_9, "9" indicates that the ninth subset 422 is used for calculating values. These values are recorded in the feature set table 423. For "AP24 Λ E49" and "AP24 Λ E39" whose feature sets are not generated from the ninth subset 422, "0" is recorded as supp_9, conf_9, chi2_9, nmi_9, and weight_9.

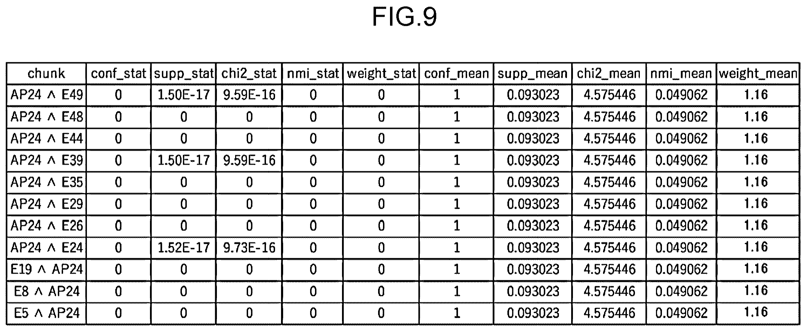

FIG. 9 illustrates an example of statistical values calculated from the feature set table 423 after the ninth subset 422 is generated. Each statistical value is calculated using nine indexes or nine levels of importance obtained from the nine subsets 422.

Here, conf_stat, supp_stat, chi2_stat, nmi_stat, and weight_stat represent standard deviations of conf, supp, chi2, nmi, and weight, respectively. The standard deviation represents a variation in the index or the importance. E-17 represents $10^{-17}$, and E-16 represents $10^{-16}$.

Here, conf_mean, supp_mean, chi2_mean, nmi_mean, and weight_mean represent average values of conf, supp, chi2, nmi, and weight, respectively.

A feature set appropriate as the response, from a viewpoint of improving the explainability of prediction to the user, is a feature set that captures the nature of data. When the same feature set is generated from each of the plurality of subsets 422 extracted from the data set 421 and the variation in the index or the importance of the feature set is small, this feature set is likely to be an appropriate feature set.

On the other hand, a feature set not appropriate as the response is a feature set that incidentally represents the same data as another feature set among feature sets generated from the entire data set 421. Such an exceptional feature set is less likely to be repeatedly generated from the plurality of subsets 422, and even when repeatedly generated, the variation in the index or the importance of the feature set is large.

Therefore, the feature set extraction unit 413 selects the appropriate feature set using the following selection conditions.

Selection Condition 1: When the number of appearances of a feature set generated from the plurality of subsets 422 is larger than a threshold T1, the feature set is selected as the appropriate feature set.

Selection Condition 2: When a reference statistical value of a feature set generated from the plurality of subsets 422 is smaller than a threshold T2, the feature set is selected as the appropriate feature set. As the reference statistical value, for example, the standard deviation or variance of the index or the importance of the feature set is used.

By using Selection Condition 1, a feature set generated from the plurality of subsets 422 a large number of times can be selected as the appropriate feature set.

By using Selection Condition 2 in which the standard deviation or variance of the index of the feature set is used as the reference statistical value, a feature set having a small variation in the index can be selected as the appropriate feature set. By using Selection Condition 2 in which the standard deviation or variance of the importance of the feature set is used as the reference statistical value, a feature set having a small variation in the importance can be selected as the appropriate feature set.

Furthermore, the number of feature sets to be selected can be controlled by adjusting the threshold T1 or the threshold T2.

As an example, Selection Condition 2 in which the reference statistical value is the standard deviation of the index or the importance of the feature set is assumed to be used. In this case, the feature set extraction unit 413 uses any one or a plurality of standard deviations in five standard deviations in FIG. 9 as the reference statistical value, and selects, from 11 chunks, a chunk having the standard deviation smaller than the threshold T2.

For example, when the reference statistical value is supp_stat and T2 = 3E-17, the following eight chunks with supp_stat = 0 are selected.

AP24 Λ E48

AP24 Λ E44

$$AP24 \land E35$$

$$AP24 \land E29$$

$$AP24 \land E26$$

$$E19 \land AP24$$

$$E8 \land AP24$$

$$E5 \land AP24$$

In this case, the specific number is 8, and the feature set extraction unit 413 generates the response including these eight chunks.

According to the information processing system in FIG. 3, it is possible to exclude an exceptional feature set from the plurality of feature sets representing the same data included in the data set 421, and to accurately and quickly extract a feature set serving as a valid prediction basis. By generating the response including the extracted feature set, the explainability of prediction is improved.

Since the number of feature sets included in the response is limited by narrowing down the feature sets serving as valid prediction basis, a data amount of the response transmitted from the extraction device 302 to the terminal device 301 can be reduced. As a result, a bandwidth used for transmitting the response can be reduced, and the utilization efficiency of the communication network 303 is improved.

FIGS. 10A and 10B are flowcharts illustrating an example of a second extraction process performed by the extraction device 302 in FIG. 4. The feature set table 423 includes first to k-th (k is an integer of 2 or more) recording regions. In each recording region, the index and the importance of each of the plurality of feature sets are recorded.

First, the subset extraction unit 411 receives a processing request from the terminal device 301 via the communication unit 414, and stores in the storage unit 415, as the data set 421, a plurality of pieces of data included in the processing request received (Step 1001).

Next, the subset extraction unit 411 initializes the feature set table 423 (Step 1002), and the extraction device 302 repeats a loop process L1 from Steps 1003 to 1008 k times.

In an i-th (i = 1 to k) loop process L1, the subset extraction unit 411 randomly extracts some data from the data set 421 and generates the subset 422 including the data extracted (Step 1003). Then, the feature set generation unit 412 generates one or more feature sets useful for data prediction by performing data mining using the subset 422 generated (Step 1004).

The number of pieces of data randomly extracted in each of the first to k-th loop processes L1 may be the same or different.

Next, the extraction device 302 repeats a loop process L2 of Steps 1005 to 1007 for each feature set generated in Step 1004.

In the loop process L2, the feature set generation unit 412 checks whether or not the feature set is included in the feature set table 423 (Step 1005).

When the feature set is not included in the feature set table 423 (Step 1005, NO), the feature set generation unit 412 adds the feature set to the feature set table 423 (Step 1006). Then, among data including a feature quantity satisfying the condition indicated by the feature set in the data set 421, the feature set generation unit 412 associates the feature set added with a label included in a certain number or more of data.

Next, the feature set extraction unit 413 calculates the index and the importance of the feature set, and records the index and the importance in an i-th recording region of the feature set table 423 (Step 1007). When the feature set is included in the feature set table 423 (Step 1005, YES), the extraction device 302 skips the process in Step 1006 and performs the process in Step 1007.

When the loop process L2 ends for all the feature sets generated, the feature set extraction unit 413 performs a process in Step 1008. In Step 1008, the feature set extraction unit 413 records "0" in the i-th recording region as the index and the importance of each of feature sets not generated in Step 1004 among the feature sets included in the feature set table 423. When i > 1, the feature set extraction unit 413 records "0" in the first to (i - 1)-th recording regions of the feature set table 423 as the index and the importance of the feature set added in Step 1006.

When a k-th loop process L1 ends, the feature set extraction unit 413 generates an empty feature set list in the storage unit 415 (Step 1009). Then, the extraction device 302 repeats a loop process L3 in Steps 1010 and 1011 for each feature set included in the feature set table 423.

In the loop process L3, the feature set extraction unit 413 checks whether the feature set satisfies the selection condition (Step 1010). As the selection condition, Selection Condition 1 or Selection Condition 2 is used.

When the feature set satisfies the selection condition (Step 1010, YES), the feature set extraction unit 413 adds the feature set to the feature set list (Step 1011). When the feature set does not satisfy the selection condition (Step 1010, NO), the feature set extraction unit 413 skips the process in Step 1011.

When the loop process L3 ends for all the feature sets included in the feature set table 423, the feature set extraction unit 413 generates a response including one or a plurality of feature sets included in the feature set list (Step 1012). Then, the feature set extraction unit 413 transmits the response to the terminal device 301 via the communication unit 414.

Depending on a type of prediction performed by the prediction model, a prediction result for some prediction target data may be estimated. In this case, not only a plurality of training data but also a plurality of prediction data can be used as the data set 421. Each piece of prediction data includes a feature quantity of each of a plurality of feature types included in the prediction target data and a correct answer label estimated from their feature quantities.

For example, in a case of prediction of a candidate being elected in an election, prediction target data of each candidate can be acquired in advance. Thus, in some cases, a candidate to be elected in an electoral district (block) can be reliably estimated from results of past elections.

Features included in the prediction target data are age, gender, a political party, a block, the number of times elected, distinction between a new candidate, an incumbent, or a former candidate, and the like. The correct answer label is information indicating winning or losing. For example, when the prediction target data of a candidate who has been elected in a specific block in the past includes the same block, information indicating winning is assigned as the correct answer label.

FIGS. 11A and 11B are flowcharts illustrating an example of a third extraction process performed by the extraction device 302 in FIG. 4. In the extraction process in FIG. 11, a plurality of training data and a plurality of prediction data are used as the data set 421.

First, the subset extraction unit 411 receives a processing request from the terminal device 301 via the communication unit 414 (Step 1101). The processing request includes a plurality of training data and a plurality of prediction target data.

Next, the subset extraction unit 411 generates prediction data by assigning the correct answer label estimated from the prediction target data to each of the plurality of prediction target data included in the processing request received (Step 1102). For example, among the plurality of prediction target data, the subset extraction unit 411 selects part of the prediction target data from which a prediction result can be reliably estimated according to an instruction from an operator. Then, the subset extraction unit 411 generates prediction data by assigning the correct answer label input by the operator to the prediction target data selected.

Next, the subset extraction unit 411 stores the plurality of training data included in the processing request received and the prediction data generated in the storage unit 415 as the data set 421 (Step 1103).

Processes in Steps 1104 to 1114 are similar to the processes in Steps 1002 to 1012 in FIGS. 10A and 10B.

According to the extraction process in FIGS. 11A and 11B, it is possible to extract an appropriate feature set as a response using not only the training data but also part of the prediction target data. By assigning a reliable correct answer label to part of the prediction target data, the extraction accuracy of the feature set can be enhanced.

In the case of prediction of a candidate being elected in an election, there may be a constraint condition for assigning the correct answer label. The constraint condition at the time of assigning the correct answer label is, for example, a condition that only a predetermined number of candidates are elected in one electoral district, and a plurality of candidates exceeding the predetermined number will not be elected.

In this case, apart from the subset 422, a prediction data set including the correct answer label assigned based on the constraint condition may be generated, and a feature set useful for data prediction may be generated from the prediction data set generated.

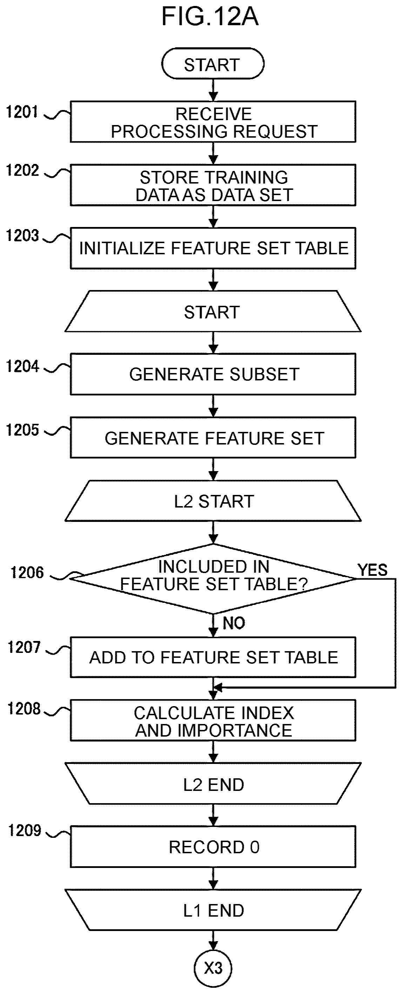

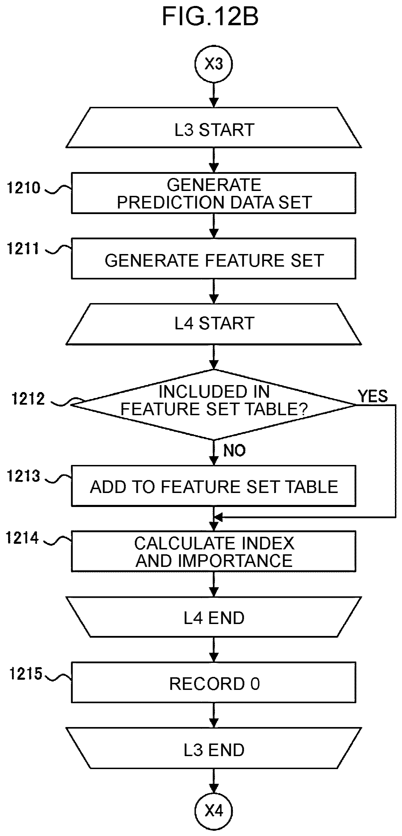

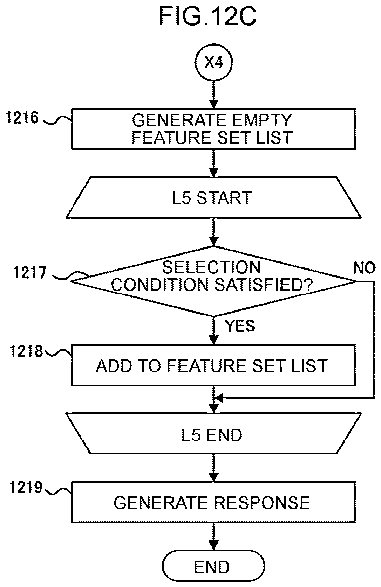

FIGS. 12A to 12C are flowcharts illustrating an example of a fourth extraction process performed by the extraction device 302 in FIG. 4. In an extraction process in FIG. 12A to 12C, t (t is an integer of 2 or more) prediction data sets are generated separately from the subset 422. Each of the prediction data sets includes a plurality of prediction data. The feature set table 423 includes first to (k + t)-th recording regions. In each recording region, the index and the importance of each of the plurality of feature sets are recorded.

First, the subset extraction unit 411 receives a processing request from the terminal device 301 via the communication unit 414 (Step 1201). The processing request includes a plurality of training data and a plurality of prediction target data. Then, the subset extraction unit 411 stores, in the storage unit 415 as the data set 421, the plurality of training data included in the processing request received (Step 1202).

Processes in Steps 1203 to 1209 are similar to the processes in Steps 1002 to 1008 in FIG. 10A.

When the k-th loop process L1 ends, the extraction device 302 repeats the loop process L3 from Steps 1210 to 1215 t times.

In a j-th (j = 1 to t) loop process L3, the feature set generation unit 412 assigns the correct answer label to each of the plurality of prediction target data included in the processing request received, and generates a prediction data set (Step 1210). For example, the feature set generation unit 412 selects some prediction target data from the plurality of prediction target data according to an instruction from the operator, and assigns the correct answer label to the prediction target data selected, thereby generating prediction data. The correct answer label is determined by the operator so as to satisfy the constraint condition related to the correct answer label.

The number of pieces of prediction target data selected in each of the first to t-th loop processes L3 may be the same or different.

Next, the feature set generation unit 412 generates one or more feature sets useful for data prediction by performing data mining using the prediction data set generated (Step 1211). Then, the extraction device 302 repeats the loop process L4 from Steps 1212 to 1215 for each feature set generated in Step 1211.

In the loop process L4, the feature set generation unit 412 checks whether the feature set is included in the feature set table 423 (Step 1212).

When the feature set is not included in the feature set table 423 (Step 1212, NO), the feature set generation unit 412 adds the feature set to the feature set table 423 (Step 1213). Then, among data including a feature quantity satisfying the condition indicated by the feature set in the data set 421, the feature set generation unit 412 associates the feature set added with a label included in a certain number or more of data.

Next, the feature set extraction unit 413 calculates the index and the importance of the feature set and records the index and the importance in the (k + j)-th recording region of the feature set table 423 (Step 1214). When the feature set is included in the feature set table 423 (Step 1212, YES), the extraction device 302 skips the process in Step 1213 and performs the process in Step 1214.

When the loop process L4 ends for all the feature sets generated, the feature set extraction unit 413 performs a process in Step 1215. In Step 1215, among the feature sets included in the feature set table 423, the feature set extraction unit 413 records "0" in the (k + j)-th recording region as the index and the importance of the feature set not generated in Step 1211. Furthermore, the feature set extraction unit 413 records "0" in the first to (k + j - 1)-th recording regions of the feature set table 423 as the index and the importance of the feature set added in Step 1213.

When the t-th loop process L3 ends, the extraction device 302 performs processes from Steps 1216 to 1219. The processes in Steps 1216 to 1219 are similar to the processes in Steps 1009 to 1012 in FIG. 10B. A loop process L5 in Steps 1217 and 1218 is similar to the loop process L3 in Steps 1010 and 1011 in FIG. 10B.

However, as the number of appearances of the feature set in Selection Condition 1, the number of appearances of the feature set generated from the plurality of subsets 422 and the plurality of prediction data sets is used. As the reference statistical value in Selection Condition 2, the reference statistical value of the feature set generated from the plurality of subsets 422 and the plurality of prediction data sets is used.

According to the extraction process in FIGS. 12A to 12C, it is possible to extract an appropriate feature set as the response using not only the training data but also part of the prediction target data. By assigning the correct answer label to some prediction target data based on the constraint condition related to the correct answer label, it is possible to improve the extraction accuracy of the feature set.

The configuration of the extraction device 101 in FIG. 1 is merely an example, and some components may be omitted or changed according to the application or condition of the extraction device 101. The configuration of the information processing system in FIG. 3 is merely an example, and some components may be omitted or changed according to the application or condition of the information processing system. For example, the information processing system may include a plurality of terminal devices 301. The configuration of the extraction device 302 in FIG. 4 is merely an example, and some components may be omitted or changed according to the application or condition of the information processing system.

The flowcharts in FIGS. 2 and 10A to 12C are merely examples, and some processes may be omitted or changed according to the configuration or condition of the extraction device 101 or the information processing system.

The data set 421 illustrated in FIG. 5 is merely an example, and the data set 421 changes according to data included in the processing request. The feature sets illustrated in FIGS. 6 to 8 and the statistical values illustrated in FIG. 9 are merely examples, and generated feature sets and calculated statistical values change according to the data set 421.

Formulas (1) to (11) are merely examples, and the extraction device 302 may perform the extraction process using other calculation formulas.

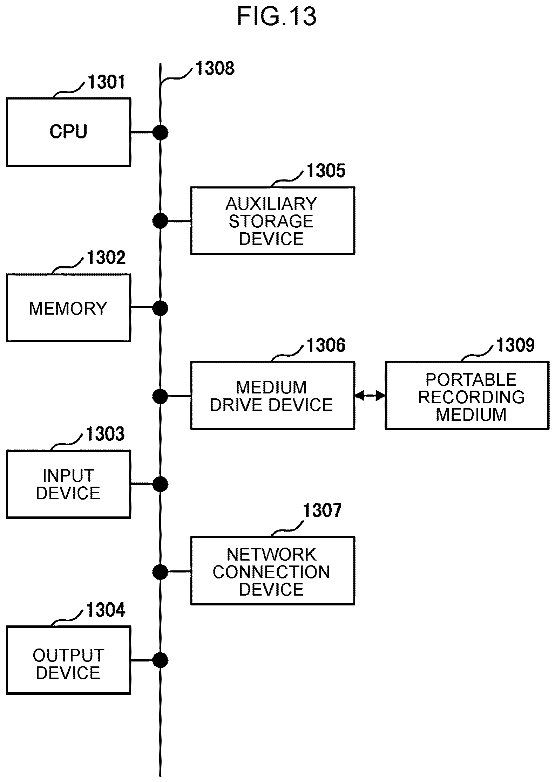

FIG. 13 illustrates a hardware configuration example of an information processing apparatus used as the extraction device 101 in FIG. 1 and the extraction device 302 in FIG. 4. The information processing apparatus in FIG. 13 includes a central processing unit (CPU) 1301, a memory 1302, an input device 1303, an output device 1304, an auxiliary storage device 1305, a medium drive device 1306, and a network connection device 1307. These components are hardware and are connected to each other by a bus 1308.

The memory 1302 is, for example, a semiconductor memory such as a read only memory (ROM), a random access memory (RAM), or a flash memory, and stores programs and data used for processing. The memory 1302 may operate as the storage unit 415 in FIG. 4.

The CPU1301 (processor) operates as the subset extraction unit 111, the combination generation unit 112, and the combination extraction unit 113 in FIG. 1, for example, by executing a program using the memory 1302.

The CPU1301 also operates as the subset extraction unit 411, the feature set generation unit 412, and the feature set extraction unit 413 in FIG. 4 by executing a program using the memory 1302.

The input device 1303 is, for example, a keyboard, a pointing device, or the like, and is used for inputting an instruction or information from an operator. The output device 1304 is, for example, a display device, a printer, a speaker, or the like, and is used for making an inquiry to the operator or outputting a processing result. The processing result may be the specific number of feature sets extracted by the feature set extraction unit 413.

The auxiliary storage device 1305 is, for example, a magnetic disk device, an optical disk device, a magneto-optical disk device, or a tape device. The auxiliary storage device 1305 may be a hard disk drive or a solid state drive (SSD). The information processing apparatus can store programs and data in the auxiliary storage device 1305, and load them into the memory 1302 for use. The auxiliary storage device 1305 may operate as the storage unit 415 in FIG. 4.

The medium drive device 1306 drives a portable recording medium 1309 and accesses recorded content in the portable recording medium 1309. The portable recording medium 1309 is a memory device, a flexible disk, an optical disk, a magneto-optical disk, or the like. The portable recording medium 1309 may also be a compact disk read only memory (CD-ROM), a digital versatile disk (DVD), a universal serial bus (USB) memory, or the like. The operator can store programs and data in the portable recording medium 1309, and load them into the memory 1302 for use.

As described above, a computer-readable recording medium that stores programs and data used for processing is a physical (non-transitory) recording medium such as the memory 1302, the auxiliary storage device 1305, or the portable recording medium 1309.

The network connection device 1307 is a communication interface circuit that is connected to the communication network 303 and performs data conversion accompanying communication. The information processing apparatus can receive programs and data from an external device via the network connection device 1307, and load them into the memory 1302 for use. The network connection device 1307 may operate as the communication unit 414 in FIG. 4.

As the terminal device 301 in FIG. 3, an information processing apparatus similar to the information processing apparatus in FIG. 13 can be used.

Note that the information processing apparatus does not need to include all the components in FIG. 13, and some components can be omitted or changed according to the application or condition. For example, when an interface with an operator is unnecessary, the input device 1303 and the output device 1304 may be omitted. When the information processing apparatus does not use the portable recording medium 1309, the medium drive device 1306 may be omitted.

Although the disclosed embodiments and their advantages have been described in detail, those skilled in the art will be able to make various changes, additions, and omissions without departing from the scope of the invention as clearly set forth in the claims.

**Claims**

1. An extraction program that causes a computer to execute a process comprising:

    extracting a plurality of subsets from a data set including a plurality of pieces of data including a feature quantity of each of a plurality of feature types, the plurality of subsets each including part of the plurality of pieces of data;
    obtaining, using each of the plurality of subsets, a combination of features useful for data prediction;
    extracting a specific number of combinations from a plurality of the combinations obtained from the plurality of subsets, the extracting being based on statistical information regarding each of the plurality of combinations; and
    outputting the specific number of combinations.

2. The extraction program according to claim 1, wherein the process further includes obtaining a number of subsets used for obtaining each of the plurality of combinations, among the plurality of subsets, the number of subsets being obtained as the statistical information regarding each of the plurality of combinations.

3. The extraction program according to claim 1, wherein the process further includes:

    calculating an index regarding each of the plurality of combinations based on data including a feature quantity satisfying a condition indicated by the each of the plurality of combinations among data included in each of the plurality of subsets; and

obtaining a statistical value of the index calculated from the each of the plurality of subsets, the statistical value being obtained as the statistical information regarding each of the plurality of combinations.

4. The extraction program according to claim 1, wherein the process further includes:

calculating an importance of each of the plurality of combinations in a predetermined number of combinations obtained from each of the plurality of subsets; and

obtaining a statistical value of the importance calculated from the each of the plurality of subsets, the statistical value being obtained as the statistical information regarding each of the plurality of combinations.

5. The extraction program according to any one of claims 1 to 4, wherein

the data set includes a plurality of training data and a plurality of prediction data used for machine training to generate a prediction model for obtaining a prediction result from data,

the plurality of training data each includes a feature quantity of each of the plurality of feature types and a correct answer label determined with respect to the feature quantity of the each of the plurality of feature types, and

the plurality of prediction data each includes a feature quantity of each of the plurality of feature types and a correct answer label estimated from the feature quantity of the each of the plurality of feature types.

6. The extraction program according to claim 1, wherein

the data set includes a plurality of training data used for machine training to generate a prediction model for obtaining a prediction result from data,

the plurality of training data each includes a feature quantity of each of the plurality of feature types and a correct answer label determined with respect to the feature quantity of the each of the plurality of feature types,

the process further includes using each of a plurality of prediction data sets to obtain the combination of features useful for data prediction,

the plurality of prediction data sets each includes a plurality of prediction data,

the plurality of prediction data each includes a feature quantity of each of the plurality of feature types and a correct answer label assigned to the feature quantity of each of the plurality of feature types, the correct answer label being assigned based on a constraint condition regarding the correct answer label, and

the extracting the specific number of combinations includes extracting the specific number of combinations from a plurality of combinations obtained from the plurality of subsets and the plurality of prediction data sets, the extracting being based on statistical information regarding each of the plurality of combinations obtained from the plurality of subsets and the plurality of prediction data sets.

7. An extraction device comprising:

a subset extraction unit configured to extract a plurality of subsets from a data set including a plurality of pieces of data including a feature quantity of each of a plurality of feature types, the plurality of subsets each including part of the plurality of pieces of data;

a combination generation unit configured to obtain, using each of the plurality of subsets, a combination of features useful for data prediction;

a combination extraction unit configured to extract a specific number of combinations from a plurality of the combinations obtained from the plurality of subsets, the extracting being based on statistical information regarding each of the plurality of combinations; and

an output unit configured to output the specific number of combinations.

8. The extraction device according to claim 7, wherein the combination extraction unit is configured to obtain a number of subsets used for obtaining each of the plurality of combinations, among the plurality of subsets, the number of subsets being obtained as the statistical information regarding each of the plurality of combinations.

9. The extraction device according to claim 7, wherein the combination extraction unit is configured to calculate an index regarding each of the plurality of combinations based on data including a feature quantity satisfying a condition indicated by the each of the plurality of combinations among data included in each of the plurality of subsets, and obtain a statistical value of the index calculated from the each of the plurality of subsets, the statistical value being obtained as the statistical information regarding each of the plurality of combinations.

10. The extraction device according to claim 7, wherein the combination extraction unit is configured to calculate an importance of each of the plurality of combinations in a predetermined number of combinations obtained from each of the plurality of subsets, and obtain a statistical value of the importance calculated from the each of the plurality of subsets, the statistical value being obtained as the statistical information regarding each of the plurality of combinations.

11. An extraction method, wherein a computer executes processing of:

extracting a plurality of subsets from a data set including a plurality of pieces of data including a feature quantity of each of a plurality of feature types, the plurality of subsets each including part of the plurality of pieces of data; obtaining, using each of the plurality of subsets, a combination of features useful for data prediction; extracting a specific number of combinations from a plurality of the combinations obtained from the plurality of subsets, the extracting being based on statistical information regarding each of the plurality of combinations; and outputting the specific number of combinations.

12. The extraction method according to claim 11, further including obtaining a number of subsets used for obtaining each of the plurality of combinations, among the plurality of subsets, the number of subsets being obtained as the statistical information regarding each of the plurality of combinations.

13. The extraction method according to claim 11, further including:

calculating an index regarding each of the plurality of combinations based on data including a feature quantity satisfying a condition indicated by the each of the plurality of combinations among data included in each of the plurality of subsets; and obtaining a statistical value of the index calculated from the each of the plurality of subsets, the statistical value being obtained as the statistical information regarding each of the plurality of combinations.

14. The extraction method according to claim 11, further including:

calculating an importance of each of the plurality of combinations in a predetermined number of combinations obtained from each of the plurality of subsets; and obtaining a statistical value of the importance calculated from the each of the plurality of subsets, the statistical value being obtained as the statistical information regarding each of the plurality of combinations.

FIG.1

101

**EXTRACTION DEVICE**

111
SUBSET EXTRACTION UNIT

112
COMBINATION GENERATION UNIT

113
COMBINATION EXTRACTION UNIT

114
OUTPUT UNIT

FIG.2

START

201
EXTRACT PLURALITY OF SUBSETS

202
OBTAIN COMBINATION OF FEATURES

203
EXTRACT SPECIFIC NUMBER OF COMBINATIONS

204
OUTPUT SPECIFIC NUMBER OF COMBINATIONS

END

303

FIG.3  301
TERMINAL DEVICE

302
EXTRACTION DEVICE

# FIG.4

## 302

EXTRACTION DEVICE

415

411 SUBSET EXTRACTION UNIT

412 FEATURE SET GENERATION UNIT

413 FEATURE SET EXTRACTION UNIT

414 COMMUNICATION UNIT

STORAGE UNIT

421 DATA SET

422 SUBSET

423 FEATURE SET TABLE

16

## FIG.5

| DATA ID | A0 | AP0 | B0 | C0 | D0 | E0 | R0 | A1 | AP1 | B1 | C1 | D1 | E1 | R1 | A2 | AP2 | B2 | C2 | D2 | E2 | R2 | A3 | AP3 | B3 | C3 | D3 | E3 | ... | LABEL |
|---|---|---|---|---|---|---|---|---|---|---|---|---|---|---|---|---|---|---|---|---|---|---|---|---|---|---|---|---|---|
| 0 | 0 | 0 | 0 | 0 | 0 | 0 | 0 | 0 | 0 | 0 | 0 | 0 | 0 | 0 | 0 | 0 | 0 | 0 | 0 | 0 | 1 | 0 | 0 | 0 | 0 | 0 | 0 | ... | 0 |
| 1 | 0 | 0 | 0 | 0 | 0 | 0 | 0 | 0 | 0 | 0 | 0 | 0 | 0 | 0 | 0 | 0 | 0 | 0 | 0 | 0 | 1 | 0 | 0 | 0 | 0 | 0 | 0 | ... | 0 |
| 2 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | ... | 0 |
| 3 | 0 | 0 | 0 | 0 | 0 | 0 | 0 | 1 | 0 | 0 | 0 | 0 | 0 | 0 | 0 | 0 | 0 | 0 | 0 | 0 | 0 | 0 | 0 | 0 | 0 | 0 | 0 | ... | 0 |
| 4 | 0 | 0 | 0 | 0 | 0 | 0 | 0 | 0 | 0 | 0 | 0 | 0 | 0 | 0 | 0 | 0 | 0 | 0 | 0 | 0 | 1 | 0 | 0 | 0 | 0 | 0 | 0 | ... | 0 |
| 5 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | ... | 0 |
| 6 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | ... | 0 |
| 7 | 0 | 0 | 0 | 0 | 0 | 0 | 1 | 0 | 0 | 0 | 0 | 0 | 0 | 0 | 0 | 0 | 0 | 0 | 0 | 0 | 1 | 0 | 0 | 0 | 0 | 0 | 0 | ... | 0 |
| 8 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | ... | 0 |
| 9 | 1 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | ... | 0 |
| 10 | 1 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | ... | 0 |
| 11 | 0 | 0 | 0 | 0 | 0 | 0 | 0 | 0 | 0 | 0 | 0 | 0 | 0 | 1 | 0 | 0 | 0 | 0 | 0 | 0 | 0 | 0 | 0 | 0 | 0 | 0 | 0 | ... | 0 |
| 12 | 1 | 0 | 0 | 0 | 0 | 0 | 0 | 0 | 0 | 0 | 0 | 0 | 0 | 0 | 0 | 0 | 0 | 0 | 0 | 0 | 1 | 0 | 0 | 0 | 0 | 0 | 0 | ... | 0 |
| ... | ... | ... | ... | ... | ... | ... | ... | ... | ... | ... | ... | ... | ... | ... | ... | ... | ... | ... | ... | ... | ... | ... | ... | ... | ... | ... | ... | ... | ... |

EP 4 660 844 A1

FIG.6

| label | chunk | len | npos | nneg | supp | conf | chi2 | nmi | weight |
|---|---|---|---|---|---|---|---|---|---|
| 1 | AP24 ∧ E49 | 2 | 4 | 0 | 0.083333 | 1 | 4.513889 | 0.043711 | 1.16 |
| 1 | AP24 ∧ E48 | 2 | 4 | 0 | 0.083333 | 1 | 4.513889 | 0.043711 | 1.16 |
| 1 | AP24 ∧ E44 | 2 | 4 | 0 | 0.083333 | 1 | 4.513889 | 0.043711 | 1.16 |
| 1 | AP24 ∧ E39 | 2 | 4 | 0 | 0.083333 | 1 | 4.513889 | 0.043711 | 1.16 |
| 1 | AP24 ∧ E35 | 2 | 4 | 0 | 0.083333 | 1 | 4.513889 | 0.043711 | 1.16 |
| 1 | AP24 ∧ E29 | 2 | 4 | 0 | 0.083333 | 1 | 4.513889 | 0.043711 | 1.16 |
| 1 | AP24 ∧ E26 | 2 | 4 | 0 | 0.083333 | 1 | 4.513889 | 0.043711 | 1.16 |
| 1 | AP24 ∧ E24 | 2 | 4 | 0 | 0.083333 | 1 | 4.513889 | 0.043711 | 1.16 |
| 1 | E19 ∧ AP24 | 2 | 4 | 0 | 0.083333 | 1 | 4.513889 | 0.043711 | 1.16 |
| 1 | E8 ∧ AP24 | 2 | 4 | 0 | 0.083333 | 1 | 4.513889 | 0.043711 | 1.16 |
| 1 | E5 ∧ AP24 | 2 | 4 | 0 | 0.083333 | 1 | 4.513889 | 0.043711 | 1.16 |

## FIG.8

| label | chunk | len | supp_9 | conf_9 | chi2_9 | nmi_9 | weight_9 |
|---|---|---|---|---|---|---|---|
| 1 | AP24 ∧ E49 | 2 | 0 | 0 | 0 | 0 | 0 |
| 1 | AP24 ∧ E48 | 2 | 0.093023 | 1 | 4.575446 | 0.049062 | 1.16 |
| 1 | AP24 ∧ E44 | 2 | 0.093023 | 1 | 4.575446 | 0.049062 | 1.16 |
| 1 | AP24 ∧ E39 | 2 | 0 | 0 | 0 | 0 | 0 |
| 1 | AP24 ∧ E35 | 2 | 0.093023 | 1 | 4.575446 | 0.049062 | 1.16 |
| 1 | AP24 ∧ E29 | 2 | 0.093023 | 1 | 4.575446 | 0.049062 | 1.16 |
| 1 | AP24 ∧ E26 | 2 | 0.093023 | 1 | 4.575446 | 0.049062 | 1.16 |
| 1 | AP24 ∧ E24 | 2 | 0.093023 | 1 | 4.575446 | 0.049062 | 1.16 |
| 1 | E19 ∧ AP24 | 2 | 0.093023 | 1 | 4.575446 | 0.049062 | 1.16 |
| 1 | E8 ∧ AP24 | 2 | 0.093023 | 1 | 4.575446 | 0.049062 | 1.16 |
| 1 | E5 ∧ AP24 | 2 | 0.093023 | 1 | 4.575446 | 0.049062 | 1.16 |

## FIG.7

| label | chunk | len | supp_8 | conf_8 | chi2_8 | nmi_8 | weight_8 |
|---|---|---|---|---|---|---|---|
| 1 | AP24 ∧ E49 | 2 | 0.093023 | 1 | 4.575446 | 0.049062 | 1.16 |
| 1 | AP24 ∧ E48 | 2 | 0.093023 | 1 | 4.575446 | 0.049062 | 1.16 |
| 1 | AP24 ∧ E44 | 2 | 0.093023 | 1 | 4.575446 | 0.049062 | 1.16 |
| 1 | AP24 ∧ E39 | 2 | 0.093023 | 1 | 4.575446 | 0.049062 | 1.16 |
| 1 | AP24 ∧ E35 | 2 | 0.093023 | 1 | 4.575446 | 0.049062 | 1.16 |
| 1 | AP24 ∧ E29 | 2 | 0.093023 | 1 | 4.575446 | 0.049062 | 1.16 |
| 1 | AP24 ∧ E26 | 2 | 0.093023 | 1 | 4.575446 | 0.049062 | 1.16 |
| 1 | AP24 ∧ E24 | 2 | 0 | 0 | 0 | 0 | 0 |
| 1 | E19 ∧ AP24 | 2 | 0.093023 | 1 | 4.575446 | 0.049062 | 1.16 |
| 1 | E8 ∧ AP24 | 2 | 0.093023 | 1 | 4.575446 | 0.049062 | 1.16 |
| 1 | E5 ∧ AP24 | 2 | 0.093023 | 1 | 4.575446 | 0.049062 | 1.16 |

EP 4 660 844 A1

FIG.9

| chunk | conf_stat | supp_stat | chi2_stat | nmi_stat | weight_stat | conf_mean | supp_mean | chi2_mean | nmi_mean | weight_mean |
|---|---|---|---|---|---|---|---|---|---|---|
| AP24 ∧ E49 | 0 | 1.50E-17 | 9.59E-16 | 0 | 0 | 1 | 0.093023 | 4.575446 | 0.049062 | 1.16 |
| AP24 ∧ E48 | 0 | 0 | 0 | 0 | 0 | 1 | 0.093023 | 4.575446 | 0.049062 | 1.16 |
| AP24 ∧ E44 | 0 | 0 | 0 | 0 | 0 | 1 | 0.093023 | 4.575446 | 0.049062 | 1.16 |
| AP24 ∧ E39 | 0 | 1.50E-17 | 9.59E-16 | 0 | 0 | 1 | 0.093023 | 4.575446 | 0.049062 | 1.16 |
| AP24 ∧ E35 | 0 | 0 | 0 | 0 | 0 | 1 | 0.093023 | 4.575446 | 0.049062 | 1.16 |
| AP24 ∧ E29 | 0 | 0 | 0 | 0 | 0 | 1 | 0.093023 | 4.575446 | 0.049062 | 1.16 |
| AP24 ∧ E26 | 0 | 0 | 0 | 0 | 0 | 1 | 0.093023 | 4.575446 | 0.049062 | 1.16 |
| AP24 ∧ E24 | 0 | 1.52E-17 | 9.73E-16 | 0 | 0 | 1 | 0.093023 | 4.575446 | 0.049062 | 1.16 |
| E19 ∧ AP24 | 0 | 0 | 0 | 0 | 0 | 1 | 0.093023 | 4.575446 | 0.049062 | 1.16 |
| E8 ∧ AP24 | 0 | 0 | 0 | 0 | 0 | 1 | 0.093023 | 4.575446 | 0.049062 | 1.16 |
| E5 ∧ AP24 | 0 | 0 | 0 | 0 | 0 | 1 | 0.093023 | 4.575446 | 0.049062 | 1.16 |

EP 4 660 844 A1

# FIG.10A

START

1001     RECEIVE
PROCESSING REQUEST

1002     INITIALIZE
FEATURE SET TABLE

L1 START

1003     GENERATE SUBSET

1004     GENERATE FEATURE SET

L2 START

1005     INCLUDED IN
FEATURE SET TABLE?     YES

NO

1006     ADD TO FEATURE SET TABLE

1007     CALCULATE INDEX
AND IMPORTANCE

L2 END

1008     RECORD 0

L1 END

X1

## FIG.10B

1009 — GENERATE EMPTY FEATURE SET LIST

L3 START

1010 — SELECTION CONDITION SATISFIED?  NO

YES

1011 — ADD TO FEATURE SET LIST

L3 END

1012 — GENERATE RESPONSE

END

# FIG.11A

START

1101 — RECEIVE PROCESSING REQUEST

1102 — GENERATE PREDICTION DATA

1103 — STORE TRAINING DATA AND PREDICTION DATA AS DATA SET

1104 — INITIALIZE FEATURE SET TABLE

L1 START

1105 — GENERATE SUBSET

1106 — GENERATE FEATURE SET

L2 START

1107 — INCLUDED IN FEATURE SET TABLE? — YES

NO

1108 — ADD TO FEATURE SET TABLE

1109 — CALCULATE INDEX AND IMPORTANCE

L2 END

1110 — RECORD 0

L1 END

X2

# FIG.11B

```
        ( X2 )
          │
          ▼
```

1111 — **GENERATE EMPTY FEATURE SET LIST**

**L3 START**

1112 — **SELECTION CONDITION SATISFIED?** ──NO──┐

YES

1113 — **ADD TO FEATURE SET LIST**

**L3 END**

1114 — **GENERATE RESPONSE**

**END**

# FIG.12A

START

1201 — RECEIVE
PROCESSING REQUEST

1202 — STORE TRAINING
DATA AS DATA SET

1203 — INITIALIZE FEATURE SET TABLE

START

1204 — GENERATE SUBSET

1205 — GENERATE FEATURE SET

L2 START

1206 — INCLUDED IN
FEATURE SET TABLE? — YES

NO

1207 — ADD TO FEATURE SET TABLE

1208 — CALCULATE INDEX
AND IMPORTANCE

L2 END

1209 — RECORD 0

L1 END

X3

# FIG.12B

(X3)

L3 START

1210 — GENERATE
PREDICTION DATA SET

1211 — GENERATE FEATURE SET

L4 START

1212 — INCLUDED IN
FEATURE SET TABLE? — YES

NO

1213 — ADD TO FEATURE SET TABLE

1214 — CALCULATE INDEX
AND IMPORTANCE

L4 END

1215 — RECORD 0

L3 END

(X4)

# FIG.12C

# FIG.13

## INTERNATIONAL SEARCH REPORT

International application No.

**PCT/JP2023/003149**

### A. CLASSIFICATION OF SUBJECT MATTER

*G06F 16/906*(2019.01)i
FI: G06F16/906

According to International Patent Classification (IPC) or to both national classification and IPC

### B. FIELDS SEARCHED

Minimum documentation searched (classification system followed by classification symbols)

G06F16/906

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | 元田 浩 外, データマイニングの基礎, 第1版第3刷, 株式会社オーム社 竹生 修己, 10 December 2008, pp. 41-48, non-official translation (MOTODA, Hiroshi et al. Basics of data mining. 1st edition. 3rd printing. OHMSHA, LTD. TAKEO, Osami.) pp. 41-48 | 1-14 |
| A | JP 2001-202383 A (MITSUBISHI ELECTRIC CORPORATION) 27 July 2001 (2001-07-27) entire text, all drawings | 1-14 |
| A | US 2014/0330843 A1 (SAMSUNG ELECTRONICS CO., LTD.) 06 November 2014 (2014-11-06) entire text, all drawings | 1-14 |

☐ Further documents are listed in the continuation of Box C.   ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **17 March 2023** | **04 April 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

## INTERNATIONAL SEARCH REPORT
### Information on patent family members

International application No.

**PCT/JP2023/003149**

| Patent document cited in search report | | | Publication date (day/month/year) | Patent family member(s) | Publication date (day/month/year) |
|---|---|---|---|---|---|
| JP | 2001-202383 | A | 27 July 2001 | (Family: none) | |
| US | 2014/0330843 | A1 | 06 November 2014 | KR 10-2014-0131471     A<br>entire text, all drawings | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2018190044 A

**Non-patent literature cited in the description**

- Hello Wide Learning (registered trademark). FUJITSU LIMITED, 06 December 2022

- **TAHARA, TAKUMA ; TAKAMA, YASUFUMI**. Proposal on visualization of closed itemset considering item category for association rule mining. *26th Fuzzy System Symposium*, 2010, 1218-1219